# EUROPEAN PATENT APPLICATION

(11) **EP 4 682 275 A1**
(43) Date of publication of application: **21.01.2026**
(21) Application number: 24884048.0
(22) Date of filing: 22.07.2024
(51) Int. Cl.: C22C 1/02, C22C 22/00, C22F 1/18, C23F 1/30, C25F 3/14

(54) **ALLOY AND PREPARATION METHOD THEREFOR AND USE THEREOF, POROUS MATERIAL, CURRENT COLLECTOR, SECONDARY BATTERY, AND DEVICE**

(30) Priority: 03.11.2023 CN 202311460854
(71) Applicant: Contemporary Amperex Technology Co., Limited, Ningde, Fujian 352100 (CN)
(72) Inventor: WANG, Manman, Ningde, Fujian 352100 (CN); LI, Zun, Ningde, Fujian 352100 (CN); GE, Xiaoming, Ningde, Fujian 352100 (CN); OUYANG, Chuying, Ningde, Fujian 352100 (CN)
(74) Representative: Ziebig Hengelhaupt Intellectual Property Attorneys Patentanwaltskanzlei PartGmbB
(86) International application number: PCT/CN2024/106701
(87) International publication number: WO 2025/092040

(57) **Abstract**

The present disclosure provides an Mn-M binary multi-phase alloy, comprising: 39 wt% ≤ Mn ≤ 78 wt%, with the balance including metal M. The standard electrode potential of the metal M is higher than the standard electrode potential of Mn, and an αMn phase, a γM-Mn phase, and a y'Mn-M phase are distributed in the binary metal multi-phase alloy. In addition, the present disclosure further relates to a method for preparing the Mn-M binary multi-phase alloy, a use thereof in preparation of a porous material, a current collector including the porous material, a secondary battery, and an electrical device.

## Description

### CROSS-REFERENCE TO RELATED APPLICATIONS

The present disclosure is proposed based on Chinese Patent Application No. 202311460854.3, filed on November 03, 2023 and entitled "ALLOY, PREPARATION METHOD THEREFOR AND USE THEREOF, POROUS MATERIAL, CURRENT COLLECTOR, SECONDARY BATTERY AND DEVICE", which is incorporated herein by reference in its entirety, and claims priority to the Chinese Patent Application.

### TECHNICAL FIELD

The present disclosure relates to the technical field of metal materials, in particular to an Mn-M binary multi-phase alloy, a preparation method and use thereof, a porous material, a current collector, a secondary battery, and an electrical device.

### BACKGROUND

Porous metal materials are a class of novel multi-functional materials that have emerged in recent years with the rapid development of material preparation and machining technologies. The inherent structural characteristics of porous metal materials allow porous metal materials to achieve diversified functions and to be widely applied in fields such as electrode materials, automotive industry, catalysis, heat exchange, etc. At present, common porous metal materials are mainly prepared by dealloying precursor alloys. However, due to the microstructure distribution of the precursor alloy, the resulting materials inevitably have inherent defects such as grain boundaries and dislocations. Therefore, there remains a significant challenge in obtaining porous materials, especially those with hierarchical pore size distributions, by dealloying treatment.

Therefore, it is necessary to continuously develop novel precursor materials to obtain improved porous materials with hierarchical pore size distributions.

### SUMMARY

The present disclosure is made in view of the above problems, and the object thereof is to provide a novel Mn-M binary multi-phase alloy in which an αMn phase, a γM-Mn phase, and a γ'Mn-M phase are distributed. By means of the coexistence of the α phase, γ phase, and y' phase, the multi-phase alloy of the present disclosure can be formed into a porous material with different levels of pore sizes after dealloying corrosion. In addition, a pore size of the porous material can be effectively and relatively easily controlled by controlling the contents and sizes of the α phase, γ phase, and y' phase.

**In** a first aspect, the present disclosure provides an Mn-M binary metal multi-phase alloy, including: 39 wt% ≤ Mn ≤ 78 wt%, optionally 68 wt% ≤ Mn ≤ 78 wt%, with the balance including metal M and inevitable impurities. The standard electrode potential of the metal M is higher than the standard electrode potential of Mn, and an αMn phase, a γM-Mn phase, and a γ'Mn-M phase are distributed in the binary metal multi-phase alloy. In the multi-phase alloy of the present disclosure, the standard electrode potential of metal M is higher than the standard electrode potential of Mn, so that during the dealloying of the Mn-M alloy, Mn is corroded, leaving M and finally forming a porous metal M material. In addition, by setting the content of Mn between 39 wt% and 78 wt%, optionally between 68 wt% and 78 wt%, it is possible to maintain a moderate corrosion rate during dealloying corrosion, and keep a porosity of the obtained porous structure as high as possible while maintaining a pore continuity of the porous material. In addition, the αMn phase, γM-Mn phase, and y'Mn-M phase exist simultaneously in the binary alloy of the present disclosure, and there are orders-of-magnitude differences in size among these three, thus giving the alloy the ability to form a porous material with a hierarchical pore size distribution by dealloying.

**In** any embodiment, the metal M is selected from one of Cu, Cr, Co, Sn, and Ni and is optionally Cu. The binary alloy formed by these metals M and Mn is dealloyed to obtain a corresponding porous Cu material, porous Cr material, porous Co material, porous Sn material and porous Ni material with hierarchical pore size distributions. These porous materials can be widely used in fields such as energy, environment, and biomedicine.

**In** any embodiment, the multi-phase alloy includes quasi-equiaxial crystal grains. Optionally, the quasi-equiaxial crystal grains have an average size of 5 µm-30 µm, optionally 10 µm-25 µm. The crystal grains in the multi-phase alloy and the size of the crystal grains affect the mechanical properties and processability of the alloy. By means of a quasi-equiaxial crystal within this range, the multi-phase alloy of the present disclosure will have an appropriate degree of plasticity and hardness, leading to easy processing.

**In** any embodiment, the crystal grains of the multi-phase alloy have grain boundaries with a discontinuous distribution of metal Mn and metal M. Grain boundaries with a discontinuous distribution of Mn and the metal M result in effective formation of a continuous framework of the metal M after corrosion, thereby obtaining a porous metal M material with a relatively regular pore size distribution.

In any embodiment, the αMn phase accounts for 4.6 wt%-65.6 wt% of the multi-phase alloy, and optionally, the content of the element Mn in the αMn phase is greater than 99 wt%. After the element Mn in the αMn phase is completely or at least substantially removed after the dealloying process, the αMn phase substantially disappears, thereby correspondingly forming a porous structure with a first pore size (hereinafter referred to as macropores) at the position of the αMn phase. The αMn phase within the range of the present disclosure can form a moderate proportion of macropores in the porous material.

In any embodiment, the γM-Mn phase and the y'Mn-M phase add up to 34.4 wt%-95.3 wt% of the multi-phase alloy. Optionally, the content of the element M in the γM-Mn phase is 35 wt%-100 wt%, and the content of the element Mn in the y'Mn-M phase is 62 wt%-72 wt%. The yM-Mn phase is an M-rich phase. During the subsequent corrosion by the dealloying method, only the element Mn contained therein is removed while the metal M contained therein is retained, thus enhancing the strength of ligaments after corrosion. The y'Mn-M alloy is an Mn-rich phase. During the subsequent corrosion by the dealloying method, after the element Mn in the y'Mn-M phase is removed, the metal Mn in this phase disappears while the metal M is retained, thereby correspondingly forming a pore (hereinafter referred to as micropores) structure with a second pore size at the Mn in the y'Mn-M phase.

In a second aspect, the present disclosure provides a method for preparing an Mn-M binary metal multi-phase alloy, including:
smelting Mn and metal M in a weight ratio of (39-78) : (22-61), optionally (68-78) : (22-32) to obtain an Mn-M binary alloy, where the standard electrode potential of the metal M is higher than the standard electrode potential of Mn;
subjecting the resulting Mn-M binary alloy to a first heat treatment to obtain a first product including a γMn-M solid solution;
subjecting the first product to a second heat treatment for crystallizing the first product to obtain a second product;
subjecting the second product to a third heat treatment to obtain a third product including a γM-Mn phase and a y'Mn-M phase; and
subjecting the third product to a fourth heat treatment to obtain a binary multi-phase alloy including an αMn phase, a γM-Mn phase, and a y'Mn-M phase.

By the preparation method of the present disclosure, an Mn-M binary multi-phase alloy including an αMn phase, a γM-Mn phase, and a γ'Mn-M phase can be specifically prepared.

In any embodiment, the method includes one or more of the following features: the first heat treatment is a homogenization heat treatment; a temperature of the first heat treatment is 720°C-900°C; a time of the first heat treatment is 12 h-24 h; and after the first heat treatment, the alloy is subjected to plastic working. Dendritic segregation formed during casting can be reduced by the above first heat treatment, and the dendritic segregation causes Mn and the metal M to be present in an irregularly segregated manner, which is detrimental to the formation of regular pores.

In any embodiment, the method further includes one or more of the following features: the second heat treatment is a recrystallization treatment; a temperature of the second heat treatment is 720°C-800°C; and a time of the second heat treatment is 0.5 h-6 h. By means of the above second heat treatment, alloy crystal grains of a quasi-equiaxial crystal are obtained. By carrying out this second heat treatment, i.e., by recrystallization, the material no longer forms a rolled orientation along the rolling direction, so that evenly distributed pores produced along the length direction after dealloying corrosion, and no strip-like corrosion pits or pores parallel to the length direction appear.

In any embodiment, the method further includes one or more of the following features: the third heat treatment is a spinodal decomposition treatment; a temperature of the third heat treatment is 400°C-500°C; and a time of the third heat treatment is 0.5 h-4 h. By means of the above third heat treatment, the second product undergoes phase decomposition to obtain a third product including a γM-Mn phase and a y'Mn-M phase. The M-rich γ phase can improve the strength of ligaments after dealloying.

In any embodiment, the method further includes one or more of the following features: the fourth heat treatment is a phase separation treatment; a temperature of the fourth heat treatment is 600°C-680°C; and a time of the fourth heat treatment is 1 h-6 h. By means of the above fourth heat treatment, the αMn phase can be precipitated, and by adjusting the temperature and time of the treatment, the proportion and size of the αMn phase can be regulated, so as to regulate the proportion and pore size of pores with the first pore size in the porous material. For example, the lower the temperature of the fourth heat treatment, the higher the proportion of the αMn phase.

In a third aspect, the present disclosure provides a use of the multi-phase alloy according to the first aspect and a multi-phase alloy prepared according to the second aspect in preparation of a porous material. Optionally, the porous material is used as a current collector in a battery collar.

In a fourth aspect, the present disclosure provides a porous material. The porous material is obtained by dealloying the multi-phase alloy of the first aspect of the present disclosure and the multi-phase alloy prepared in the second aspect during the preparation of the porous material. The porous material has pores with a first pore size and a second pore size. The first pore size is n microns, with 0.5 ≤ n ≤ 10, optionally 2 ≤ n ≤ 5, and the second pore size is m nanometers, with 20 < m < 200, optionally 40 < m < 70.

In a fifth aspect, the present disclosure provides a current collector including the porous material according to the fourth aspect.

In a sixth aspect, the present disclosure provides a secondary battery including the current collector according to the fifth aspect.

In a seventh aspect, the present disclosure provides an electrical device including the secondary battery according to the sixth aspect.

In the present disclosure, the content of the metal Mn in the alloy is set to 39 wt%-78 wt%, so that when obtaining the porous structure by dealloying, the porosity is as relatively high as possible while the porous framework is maintained stable, and at the same time, the corrosion rate will not be too fast or too slow to affect the pore continuity of the porous material. Moreover, by distributing the needle-like α phase, γ phase (M-rich phase) and y' phase (Mn-rich phase) in the crystal grains of the alloy, porous materials with various porosity distributions (such as micron and nano-scaled pore sizes) can be obtained by the dealloying method. In addition, by controlling the proportions and sizes of the α phase, γ phase (M-rich phase), and y' phase (Mn-rich phase), the pore sizes and proportions of pores with a first pore size and pores with a second pore size in the porous material can be flexibly adjusted. For example, by adjusting the temperature and time of the fourth heat treatment, the proportion and size of the αMn phase in the alloy can be regulated, and thus, the proportion and pore size of the pores with the first pore size in the porous material can be regulated.

### BRIEF DESCRIPTION OF THE DRAWINGS

FIG. 1A is a metallographic photograph of a binary multi-phase alloy prepared in Embodiment 3.
FIG. 1B is a backscattering photograph of the binary multi-phase alloy prepared in Embodiment 3.
FIG. 2 is an XRD pattern of the binary multi-phase alloy prepared in Embodiment 3.
FIGs. 3A and 3B are a scanning electron microscope photograph of the binary multi-phase alloy of Embodiment 3 after dealloying.
FIG. 4 is a photograph of a precursor prepared in Comparative Example 1.
FIG. 5 is a scanning photograph of the alloy of Comparative Example 1 as a precursor after dealloying.
FIG. 6 is a phase diagram of an Mn-Cu binary alloy.
FIG. 7 is a schematic view of a secondary battery according to an embodiment of the present disclosure.
FIG. 8 is an exploded view of the secondary battery according to the embodiment of the present disclosure as shown in FIG. 7.
FIG. 9 is a schematic view of a battery module according to an embodiment of the present disclosure.
FIG. 10 is a schematic view of a battery pack according to an embodiment of the present disclosure.
FIG. 11 is an exploded view of the battery pack according to the embodiment of the present disclosure as shown in FIG. 10.
FIG. 12 is a schematic view of an electrical device in which a secondary battery serves as a power source according to an embodiment of the present disclosure.

### Description of reference numerals:

1. Battery pack; 2. upper box; 3. lower box; 4. battery module; 5. secondary battery; 51 case; 52 electrode assembly; 53 top cover assembly.

### DETAILED DESCRIPTION

Hereinafter, embodiments of the multi-phase alloy, the preparation method therefor, and the use thereof, the porous material, the current collector, the secondary battery, and the device of the present disclosure are specifically disclosed with appropriate reference to the detailed description of the accompanying drawings. However, there may be situations where unnecessary detailed explanations are omitted. For example, there are situations where detailed explanations of well-known matters and repeated explanations of actually the same structure are omitted. This is to prevent the following description from becoming unnecessarily lengthy and to facilitate the understanding of those skilled in the art. In addition, the drawings and subsequent descriptions are provided for those skilled in the art to fully understand the present disclosure and are not intended to limit the subject matter defined in the claims.

The "ranges" disclosed in the present disclosure are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present disclosure, unless otherwise specified, the numerical value range "a-b" represents an abbreviated representation of any combination of real numbers between a and b, where a and b are both real numbers. For example, the numerical value range "0-5" indicates that all real numbers between "0-5" have been listed herein, and "0-5" is only a shortened representation of these numerical value combinations. In addition, when a parameter is expressed as an integer greater than or equal to 2, it is equivalent to disclosing that the parameter is, for example, an integer of 2, 3, 4, 5, 6, 7, 8, 9, 10, 11, 12, etc.

Unless expressed to the contrary, the following terms used in the specification and claims have the following meanings.

The "standard electrode potential" mentioned herein refers to an equilibrium potential measured when the temperature is 25°C and an effective concentration of metal ions is 1 mol/L (i.e., an activity of 1), which reflects the redox ability of a substance. The standard electrode potential of Mn is -1.18 V. A metal with a higher standard electrode potential than Mn refers to a metal, the standard electrode potential of which is more positive than -1.18 V, e.g., Co (-0.277 V), Ni (-0.25 V), Sn (+0.15 V), Cu (+0.337 V), and Cr (+1.64 V). The standard electrode potential of each metal is well known in the art and will not be described in detail here. The difference in standard electrode potential between Mn and the metal M enables removal of most or even all of the element Mn from the αMn, γM-Mn phase and γ'Mn-M phase with little or no removal of the element M during the preparation of the porous material by the dealloying method.

The "αMn phase" mentioned herein refers to an allotrope of Mn with a body-centered cubic (bcc) structure.

The "γM" mentioned herein refers to an allotrope of M with a face-centered cubic (fcc) structure.

The "γMn" mentioned herein refers to an allotrope of Mn with a face-centered cubic (fcc) structure.

The "γM-Mn phase" mentioned herein refers to a solid solution phase formed by dissolving Mn in γM. In some embodiments, the content of the element M in the γM-Mn phase is 35 wt%-100 wt%.

The "γ'Mn-M phase" mentioned herein refers to a solid solution phase formed by dissolving M in γMn. In some embodiments, the content of the element Mn in the y'Mn-M phase is 60 wt%-74 wt%.

The "solid solution" mentioned herein refers to a single-phase crystalline solid formed by dissolving one or more solute constituents in a crystalline solvent and maintaining the lattice structure of the solvent.

The "quasi-equiaxial crystal grains" mentioned herein have crystal grains with relatively small size differences in all directions.

The "dealloying method" mentioned herein means selectively removing relatively active metal atoms from a system based on the difference in standard electrode potential between metals in the system, while the remaining metal atoms are interconnected to form a porous material. For example, the dealloying method includes, but is not limited to, chemical corrosion, electrochemical corrosion, or a combination thereof.

The "metallographic photograph" mentioned herein refers to a micrograph that can reflect the microstructure of metals, especially the phase distribution. The metallographic photograph can be taken by an optical microscope or an electron microscope.

Unless otherwise specified, all the embodiments and optional embodiments of the present disclosure can be combined with each other form new technical solutions.

Unless otherwise specified, all technical features and optional technical features of the present disclosure can be combined with each other to form new technical solutions.

Unless otherwise specified, all the steps in the present disclosure can be carried out, either in order or randomly, preferably in order. For example, the method includes steps (a) and (b), which means that the method may include steps (a) and (b) performed in order, or may include steps (b) and (a) performed in order. For example, reference to "the method may further include step (c)" indicates that step (c) may be added to the method in any order, for example, the method may include steps (a), (b), and (c), or steps (a), (c), and (b), or steps (c), (a), and (b), etc.

As mentioned above, a porous metal material is a combination of a structural material and a functional material, which integrates various properties such as electrical properties, permeability, damping properties, and flow properties, and has incomparable superiority over traditional materials in applications. At present, the demand and requirements for porous materials with hierarchical pore size distributions are increasing, so the preparation of such porous materials has also attracted more and more attention. The previous common porous metal materials are mainly prepared by dealloying. However, due to the non-uniformity of the components of the precursor alloy and the inevitable presence of inherent defects such as grain boundaries and dislocations in the material, there still remains a big challenge in obtaining porous materials with hierarchical pore size distributions by dealloying treatment. Therefore, there is still a need to develop a novel precursor material to prepare an improved porous material with a hierarchical pore size distribution.

The present disclosure provides an Mn-M binary multi-phase alloy material with an improved structure, especially an Mn-Cu alloy material, by changing the composition and phase state of a precursor alloy material. The present invention and preferred embodiments will be described in more detail below.

### [Mn-M binary multi-phase alloy]

The "Mn-M binary multi-phase alloy" mentioned herein refers to an alloy that includes Mn and the metal M and has two or more metal phases at room temperature. The "metal phase" mentioned herein includes, but is not limited to, for example, an α phase, a β phase, and a y phase.

In some embodiments, the present disclosure provides an Mn-M binary multi-phase alloy. The multi-phase alloy includes: 39 wt% ≤ Mn ≤ 78 wt%, optionally 68 wt% ≤ Mn ≤ 78 wt%, with the balance including the metal M. The standard electrode potential of the metal M is higher than the standard electrode potential of Mn, and an αMn phase, a γM-Mn phase, and a y'Mn-M phase are distributed in the binary metal multi-phase alloy. It should be understood that the binary multi-phase alloy of the present disclosure further includes inevitable impurities. Here, as inevitable impurities, although Mg, Al, Si, Ag, Ca, S, O, C, Be, N, H, B, Zr, rare earth elements, etc. can be listed, the total amount of these inevitable impurities is preferably 0.1 wt% or less. The weight percentage involved in the present disclosure, namely wt%, is determined by atomic fluorescence spectrometry well known in the art.

In the present disclosure, 39 wt% ≤ Mn ≤ 78 wt%, optionally 68 wt%≤ Mn ≤ 78 wt%, so that when obtaining the porous structure by dealloying, the porosity is as relatively high as possible while the porous framework can be maintained stable, and at the same time, the corrosion rate will not be too fast or too slow to affect the pore continuity of the porous material. The αMn phase, γM-Mn phase, and y'Mn-M phase exist simultaneously in the alloy, and there are orders-of-magnitude differences in size among these three. Therefore, during the subsequent preparation of the porous material, the α phase will form pores with a pore size of 0.5 µm-10 µm after dealloying corrosion, while the γ phase and y' phase will form 20 nm-200 nm pores, thus forming a porous material with a hierarchical pore size distribution.

In some embodiments, the metal M can be, for example, selected from one of Cu, Cr, Co, Sn, and Ni. In some embodiments, the metal M is Cu. For example, the alloy formed by these metal elements and Mn is dealloyed to obtain a corresponding porous Cu material, porous Cr material, porous Co material, porous Sn material and porous Ni material with hierarchical pore size distributions, for example. These metal porous materials are widely used in fields such as energy, environment, and biomedicine. Specifically, for example, the porous Cu material and porous Ni are used as current collectors in batteries, and porous Sn is used in the field of catalysis.

In some embodiments, the multi-phase alloy includes quasi-equiaxial crystal grains. In practice, after being rolled into a foil, the material will form a rolled orientation along the rolling direction, and the rolled orientation will lead to the presence of uneven distribution of pores along the length direction after corrosion, so that strip-like corrosion pits or pores parallel to the length direction appear. The quasi-equiaxial crystal grains avoid that the pores are only in the rolling direction after corrosion, so there will be no strip-like corrosion pits or pores parallel to the length direction in the subsequent corrosion.

In some embodiments, the multi-phase alloy of the present disclosure includes quasi-equiaxial crystal grains with an average size of 5 µm-30 µm, optionally 10 µm-25 µm. The grain size is obtained by placing a sample under a metallographic microscope to obtain a metallographic structure, statistically measuring the sizes of 50 crystal grains, and then taking the average value. The crystal grains in the multi-phase alloy and the size of the crystal grains affect the mechanical properties and processability of the alloy. By means of a quasi-equiaxial crystal within this range, the multi-phase alloy of the present disclosure will have an appropriate degree of plasticity and hardness, leading to easy processing.

In some embodiments, the crystal grains of the multi-phase alloy have grain boundaries with a discontinuous distribution of metal Mn and metal M. Grain boundaries with a discontinuous distribution of Mn and the metal M result in effective formation of a continuous framework of the metal M after corrosion, thereby obtaining a porous metal M material with a relatively regular pore size distribution, so that neither does the porous structure collapse during corrosion despite the presence of continuous grain boundaries of Mn, nor does the porous material have pore-free regions despite the presence of continuous grain boundaries of the metal M.

In some embodiments, the αMn phase accounts for 4.6 wt%-65.6 wt% of the multi-phase alloy. After the element Mn in the αMn phase is completely or at least substantially removed, the αMn phase completely or substantially disappears, thereby correspondingly forming a pore structure with a first pore size (hereinafter referred to as macropores) formed at the position of the αMn phase. The αMn phase within the range of the present disclosure can form a moderate proportion of macropores.

In some embodiments, the content of the element Mn in the αMn phase is greater than 99 wt%, e.g., 99.1 wt %, 99.2 wt %, 99.3 wt %, 99.4 wt %, 99.5 wt %, 99.6 wt %, 99.7 wt %, 99.8 wt %, and 99.9 wt %. Advantageously, based on all the element Mn in the αMn phase, at least 89 wt% or more, e.g., 95 wt% or more, e.g., 99 wt% or more of the element Mn is removed from the αMn phase by the dealloying method. Therefore, the subsequently obtained porous material has a first pore size. The first pore size is n microns, with 0.5 ≤ n ≤ 10, for example, optionally the value of n is 0.5-1, 1-5, 5-10, 2-8, or 2-7, optionally 2 ≤ n ≤ 5.

In some embodiments, the γM-Mn phase and the y'Mn-M phase add up to 34.4 wt%-95.3 wt% of the multi-phase alloy. In some embodiments, the content of the element M in the γM-Mn phase is 35 wt%-100 wt%. The γM-Mn phase is an M-rich phase. During the subsequent corrosion by the dealloying method, only the element Mn contained therein is removed while the metal M contained therein is retained, thus enhancing the strength of ligaments after corrosion.

In some embodiments, the content of the element Mn in the y'Mn-M phase is 60 wt%-72 wt%. The y'Mn-M alloy is an Mn-rich phase. During the subsequent corrosion by the dealloying method, after the element Mn in the y'Mn-M phase is removed, the metal Mn in this phase disappears while the metal M is retained, thereby correspondingly forming a pore (hereinafter referred to as micropores) structure with a second pore size at the Mn in the γ'Mn-M phase. Advantageously, based on all the element Mn in the y'Mn-M phase, at least 89 wt% or more, e.g., 94 wt% or more of the element Mn is removed from the y'Mn-M phase by the dealloying method. On this basis, the obtained porous material has a second pore size, and the second pore size is m nanometers, for example, 20 < m < 200. Optionally, the value of m is 20-50, 50-100, 100-150, or 150-200, optionally 40 < m < 70. Together with the macropores formed by the corrosion of the αMn phase, a porous material with a hierarchical pore size distribution is formed.

### [Preparation method]

An embodiment of that present disclosure provides a method for preparing an Mn-M binary multi-phase alloy.

The method includes:
smelting Mn and metal M in a weight ratio of (39-78) : (22-61), optionally (68-78) : (22-32) to obtain an Mn-M binary alloy, where the standard electrode potential of the metal M is higher than the standard electrode potential of Mn;
subjecting the resulting Mn-M binary alloy to a first heat treatment to obtain a first product including a γMn-M solid solution;
subjecting the first product to a second heat treatment for crystallizing the first product to obtain a second product;
subjecting the second product to a third heat treatment to obtain a third product including a γM-Mn phase and a y'Mn-M phase; and
subjecting the third product to a fourth heat treatment to obtain a binary multi-phase alloy including an αMn phase, a γM-Mn phase, and a y'Mn-M phase.

In some embodiments, the first heat treatment is a homogenization heat treatment. Dendritic segregation formed during casting can be reduced by the homogenization heat treatment. This is because the dendritic segregation causes Mn and the metal M to be present in an irregularly segregated manner, which is detrimental to the formation of regular pores.

In some embodiments, a temperature of the first heat treatment is 720°C-900°C, optionally 850°C-900°C, such as 900°C, and the treatment time is 12 h-24 h, optionally 20 h-24 h, such as 24 h.

In some embodiments, the homogenization heat treatment should result in the content of the Mn-M solid solution in the first product being 95-100 vol%, e.g., 96 vol%, 99 vol%, 98 vol%, 99 vol%, 99.5 vol% based on the total volume of the first product. The "volume percentage" involved herein is obtained by phase diagram calculation. That is, substantially all the alloy has been transformed into the form of an Mn-M solid solution. The first product containing the γMn-M phase has excellent plasticity at room temperature. By processing the first product by forging, rolling, drawing, and other plastic working methods, processed products with various shapes and sizes can be obtained. The processed product can maintain the shape and size stable during the subsequent heat treatment and dealloying processes.

In some embodiments, between the first heat treatment and the second heat treatment, the above method includes: subjecting the obtained Mn-M binary alloy to plastic working (forging, rolling, drawing, etc.) to form processed products with various shapes and sizes. For example, in some embodiments, the first product is rolled to obtain a foil with a thickness of 0.05 mm-1 mm, without limitation.

In some embodiments, the second heat treatment is a recrystallization treatment. By the recrystallization treatment, alloy crystal grains of a quasi-equiaxial crystal are obtained. Without recrystallization, the material will form a rolled orientation along the rolling direction after rolling into a foil. The rolled orientation will lead to the presence of uneven distribution of pores along the length direction after corrosion, so that strip-like corrosion pits or pores parallel to the length direction appear.

In some embodiments, the temperature of the second heat treatment is 720°C-800°C, optionally 720°C-750°C, e.g., 750°C, and the treatment time is 0.5 h-6 h, optionally 0.5 h-1 h, e.g., 1 h.

In some embodiments, the third heat treatment is a spinodal decomposition treatment. By means of the spinodal decomposition treatment, the uniform M-Mn phase is decomposed to obtain a third product including a γM-Mn phase and a y'Mn-M phase. The M-rich γ phase can improve the strength of ligaments after dealloying.

In some embodiments, the temperature of the third heat treatment is 400°C-500°C, optionally 400°C-450°C, e.g., 450°C, and the treatment time is 0.5 h-4 h, optionally 1 h-2 h, e.g., 1.5 h.

In some embodiments, the fourth heat treatment is a phase separation treatment. By means of the fourth treatment step, the αMn phase is separated from the M-rich γ phase and the Mn-rich γ' phase to obtain a binary multi-phase alloy including an αMn phase, a γM-Mn phase, and a y'Mn-M phase.

In some embodiments, the temperature of the fourth heat treatment is 600°C-680°C, optionally 650°C-680°C, e.g., 650°C, and the time of the fourth heat treatment is 1 h-6 h, optionally 4 h-6 h, e.g., 4 h. In some embodiments, by adjusting the temperature and time of the fourth heat treatment by controlling, the proportion and size of the precipitated αMn phase can be regulated, and thus, the proportion and pore size of the pores with the first pore size in the porous material can be regulated. For example, the lower the temperature of the fourth heat treatment, the higher the proportion of the αMn phase.

In some specific embodiments, the method for preparing an Mn-M binary multi-phase alloy according to the present disclosure includes:
(1) preparing pure Mn and pure M (purity requirement ≥ 99.9%) in a weight ratio of (39-78) : (22-61), optionally (68-78) : (22-32), and performing vacuum induction melting to prepare an Mn-M binary alloy, where the standard electrode potential of the metal M is higher than the standard electrode potential of Mn;
(2) subjecting the Mn-M binary alloy prepared in step 1 to forging and homogenization heat treatments to obtain a first product including a γMn-M solid solution, where the forging pressure is 20 tons-2000 tons, the temperature of the homogenization heat treatment is 720°C-900°C, and the treatment time is 12 h-24 h;
(3) rolling the first product to obtain a foil with a thickness of 0.05 mm-1 mm;
(4) subjecting the foil to a recrystallization treatment to obtain a second product, where the treatment temperature is 720°C-800°C, and the treatment time is 0.5 h-6 h;
(5) subjecting the second product to a spinodal decomposition treatment to obtain a third product, where the treatment temperature is 400°C-500°C, and the treatment time is 0.5 h-4 h; and
(6) subjecting the third product to a phase separation treatment to obtain the Mn-M binary multi-phase alloy of the present disclosure, where the treatment temperature is 600°C-680°C, and the treatment time is 1 h-6 h.

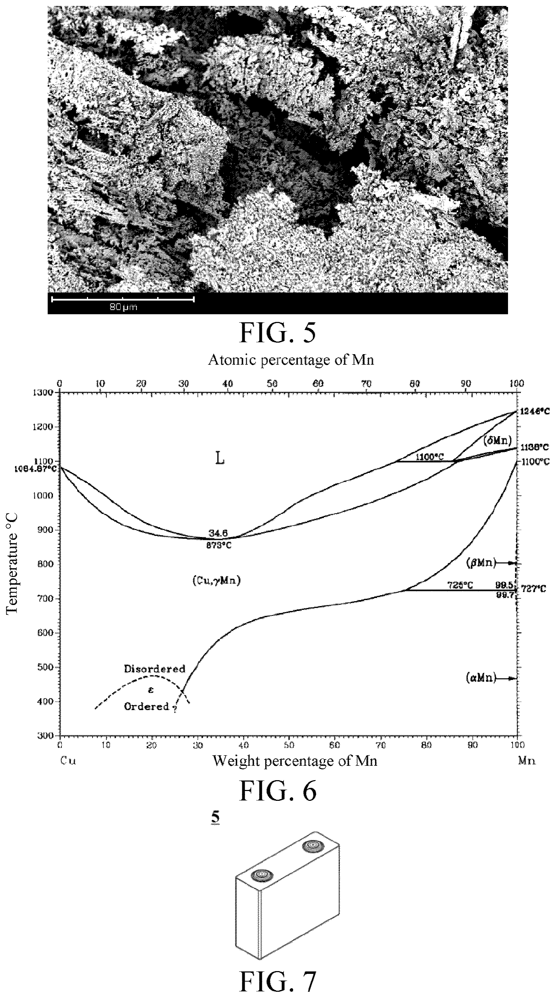

Taking Mn-Cu as an example, as shown in the binary alloy phase diagram in FIG. 6, the Mn-Cu binary alloy (with an Mn content of 39 wt%-78 wt%) exhibits a γ-Mn single-phase structure in a temperature range of 720°C-900°C and an α/γ biphase structure in a temperature range of 500°C-700°C. Therefore, the Mn-Cu alloy prepared by smelting can be annealed at a high temperature (700°C-865°C) in advance to obtain a y single-phase alloy with excellent plastic workability and prepare precursor alloys with various shapes. Subsequently, a low-temperature (600°C-680°C) aging treatment is carried out to form an α/γ biphase structure for preparing the final porous material.

### [Use of alloy]

**In** some embodiments, the present disclosure provides a use of the Mn-M binary multi-phase alloy in preparation of a porous material. Optionally, the porous material is used as a current collector, a catalyst, an adsorbent, a carrier, a molecular sieve, etc.

### [Porous material]

**In** some embodiments, the present disclosure provides a porous material obtained by dealloying the Mn-M binary metal multi-phase alloy of the present disclosure. The porous material has pores with a first pore size and a second pore size. The first pore size is n microns, with 0.5 ≤ n ≤ 10, optionally 2 ≤ n ≤ 5, and the second pore size is m nanometers, with 20 < m < 200, optionally 40 < m < 70.

**In** some embodiments, the porous material is gas-permeable and/or liquid-permeable.

**In** some embodiments, the dealloying method is selected from chemical corrosion, electrochemical corrosion, or a combination thereof. The dealloying process is mainly based on the difference of standard electrode potential of precursor components, and relatively active elements in the system are selectively removed, while the remaining metal atoms are interconnected to obtain a porous material.

The porous material obtained by the present disclosure has hierarchical pore size distribution characteristics (such as nanopores and micropores). The porous material is particularly suitable for, without limitation, an anode-free metal battery (e.g., an anode-free lithium metal battery or an anode-free sodium metal battery) or a metal or alloy negative electrode battery. For example, an inner wall of a pore with a first pore size (hereinafter referred to as a macropore) can be used as a substrate for the deposition of an active substance. In addition, another function of the macropore is to provide an electrolyte solution infiltration channel. An inner wall of a pore with a second pore size (hereinafter referred to as a micropore) can be used as a substrate for the deposition of an active substance. The micropore improves a specific surface area of the material, so that the porous material can be loaded with more active substance. In addition, another function of the micropore is to serve as a template for the deposition of the active substance. Specifically, due to the limitation of the size of the micropore, the active substance deposited in the micropore has a nano-scaled size, and the nano-scaled size active substance has a higher ionic conductivity due to its small size. Thus, the overall ionic conductivity of an electrode can be improved, which can further improve the rate performance of a battery, thereby finally improving the overall capacity, cycling stability and rate performance of the battery. In addition, another function of the micropore is to limit the volume expansion of the active material and avoid powdering-induced failure thereof.

In addition, the secondary battery and electrical device of the present disclosure are described below with appropriate reference to the accompanying drawings.

### [Secondary battery]

An embodiment of the present disclosure provides a secondary battery.

The term "secondary battery" mentioned herein refers to a battery cell, a battery module, or a battery pack. They are described separately below.

Generally, the secondary battery cell includes a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### [Positive electrode plate]

The positive electrode plate includes a positive electrode current collector and a positive electrode film layer arranged on at least one surface of the positive electrode current collector, and the positive electrode film layer includes a positive electrode active material.

By way of example, the positive electrode current collector has two surfaces opposite to each other in a thickness direction of the positive electrode current collector, and the positive electrode film layer is arranged on either or both of the two opposite surfaces of the positive electrode current collector.

In some embodiments, the positive electrode current collector may include the porous material described above in the present disclosure. The positive electrode current collector can also be a composite current collector, for example, it can be formed by compounding the porous material mentioned in the present disclosure with a polymer material substrate (such as polypropylene (PP), polyethylene terephthalate (PET), polybutylene terephthalate (PBT), polystyrene (PS), and polyethylene (PE)).

In some embodiments, when the battery cell is a lithium-ion battery, the positive electrode active material may be a positive electrode active material well-known in the art for lithium-ion batteries. For example, the positive electrode active material may include at least one of the following materials: a lithium-containing phosphate with an olivine structure, a lithium transition metal oxide, and respective modified compounds thereof. However, the present disclosure is not limited to these materials. Other traditional materials that can be used as positive electrode active materials for batteries may alternatively be used. Only a single one of or a combination of two or more of these positive electrode active materials can be used. Examples of lithium transition metal oxides can include, but are not limited to, at least one of lithium cobalt oxide (e.g., LiCoO₂), lithium nickel oxide (e.g., LiNiO₂), lithium manganese oxide (e.g., LiMnO₂ and LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (e.g., LiNi_{0.85}Co_{0.15}Al_{0.05}O₂), modified compounds thereof, etc. Examples of the lithium-containing phosphate with an olivine structure can include, but are not limited to, at least one of lithium iron phosphate (LiFePO₄ (also abbreviated as LFP)), a composite material of lithium iron phosphate and carbon, lithium manganese phosphate (such as LiMnPO₄), a composite material of lithium manganese phosphate and carbon, lithium iron manganese phosphate, and a composite material of lithium iron manganese phosphate and carbon.

When the battery cell is a sodium ion battery, the positive electrode active substance may include at least one of sodium transition metal oxide, a polyanionic compound, and a Prussian blue compound. However, the present disclosure is not limited to these materials. Other well-known traditional materials that can be used as positive electrode active materials for sodium ion batteries may also be used.

In an optional technical solution of the present disclosure, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

In an optional technical solution of the present disclosure, the polyanionic compound may be a class of compounds having sodium ions, transition metal ions, tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents a valence of (YO₄)ⁿ⁻.

The polyanionic compound may also be a class of compounds having sodium ions, transition metal ions, tetrahedral (YO₄)ⁿ⁻ anion units, and halogen anions. The transition metal may be at least one of Mn, Fe, Ni, Co, Cr, Cu, Ti, Zn, V, Zr, and Ce; Y may be at least one of P, S, and Si, and n represents a valence of (YO₄)ⁿ⁻; and the halogen may be at least one of F, Cl, and Br.

The polyanionic compound may also be a class of compounds having sodium ions, tetrahedral (YO₄)ⁿ⁻ anion units, polyhedral unit (ZO_{y})^{m+}, and optional halogen anions. Y may be at least one of P, S, and Si, and n represents a valence of (YO₄)ⁿ⁻; Z represents a transition metal and may be at least one of Mn, Fe, Ni, Co, Cr, Cu, Ti, Zn, V, Zr, and Ce, and m represents a valence of (ZO_{y})^{m+}; and the halogen may be at least one of F, Cl, and Br.

The polyanionic compound is, for example, at least one of NaFePO₄, Na₃V₂(PO₄)₃, NaM'PO4F (where M' is one or more of V, Fe, Mn, and Ni), and Na₃(VO_{y})₂(PO₄)₂F_{3-2y} (0 ≤ y ≤ 1).

The Prussian blue compound may be a class of compounds having sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

The battery will be accompanied by the deintercalation and consumption of Li during the charging and discharging process, and the molar content of Li varies as the battery is discharged to different states. In the enumeration of positive electrode materials in the present disclosure, the molar content of Li is the initial state of the material, that is, the state before feeding. When the positive electrode material is applied to a battery system, the molar content of Li will change after charge-discharge cycling.

In the list of positive electrode materials in the present disclosure, the molar content of O is only a theoretical state value, and the molar content of oxygen will change due to the release of oxygen from the crystal lattice, so that the actual molar content of O will fluctuate.

In some embodiments, the positive electrode film layer optionally includes a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further includes optionally a conductive agent. By way of example, the conductive agent can include at least one of superconducting carbon, acetylene black, carbon black, Ketjen black, carbon dots, carbon nanotubes, graphene, and carbon nanofibers.

In some embodiments, the positive electrode plate can be prepared by dispersing the above components for preparing the positive electrode plate, e.g., the positive electrode active material, the conductive agent, the binder, and any other components, in a solvent (e.g., N-methylpyrrolidone) to form a positive electrode slurry; and applying the positive electrode slurry to a positive electrode current collector, followed by processes such as drying and cold pressing to obtain the positive electrode plate.

### [Negative electrode current collector and negative electrode plate]

The porous material of the present disclosure can be directly used as a negative electrode side current collector (or electrode) of an anode-free metal battery (e.g., an anode-free lithium metal battery or an anode-free sodium metal battery).

In an anode-free lithium battery, all active lithium ions are initially stored in a positive electrode material. During the initial charging process, lithium ions are extracted from the positive electrode, moved to a negative electrode, and directly electroplated in situ on a negative electrode bare current collector to form a lithium metal negative electrode. Subsequently, during discharging, active lithium ions are stripped from the in-situ formed lithium metal negative electrode and intercalated into the positive electrode. Lithium anode-free batteries have a small volume and a relatively high energy density.

The porous material of the present disclosure can also be used as a negative electrode side current collector of a battery containing an active metal/alloy negative electrode.

In some embodiments, the active metal/alloy is, for example, the metal lithium or a lithium alloy.

In some embodiments, a negative electrode plate of a lithium metal battery has the porous material of the present disclosure as a negative electrode current collector. A lithium metal layer is deposited on an outer surface and/or internal pores of the porous material.

The term "lithium alloy" used herein is intended to represent a substance that can form an alloy with lithium by charging and can reversibly adsorb and release lithium. Examples of substances capable of forming alloys with lithium include metal elements such as tin (Sn), silicon (Si), zinc (Zn), aluminum (Al), magnesium (Mg), indium (In), cadmium (Cd), lead (Pb), bismuth (Bi) and antimony (Sb) and compounds thereof and alloys thereof (including alloys of lithium and these element metals). One or two or more of these substances can be appropriately used by appropriate selection.

In some embodiments, other active metals/alloys besides the metal lithium or lithium alloys include metal elements such as tin (Sn), silicon (Si), zinc (Zn), aluminum (Al), magnesium (Mg), indium (In), cadmium (Cd), lead (Pb), bismuth (Bi) and antimony (Sb) and compounds thereof and alloys thereof (including alloys of lithium and these element metals).

In some embodiments, electrodeposition, vapor deposition (such as physical/chemical vapor deposition), magnetron sputtering and other methods can be used to deposit active metals/alloys on the surface of the porous material and inside the pores of the porous material, so as to obtain the negative electrode of the battery.

### [Electrolyte]

The electrolyte plays a role in conducting ions between the positive electrode plate and negative electrode plate. The type of the electrolyte is not specifically limited in the present disclosure and can be selected according to requirements. For example, the electrolyte can be liquid, gelled, or all solid.

In some embodiments, the electrolyte is an electrolyte solution. The electrolyte solution includes an electrolyte salt and a solvent.

In some embodiments, the electrolyte salt can be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further includes optionally an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### [Separator]

In some embodiments, the battery cell further includes a separator. The type of the separator is not particularly limited in the present disclosure, and any well-known separator with a porous structure having good chemical stability and mechanical stability can be selected.

In some embodiments, a material of the separator can be selected from at least one of glass fibers, non-woven fabric, polyethylene, polypropylene, and polyvinylidene fluoride. The separator can be either a single-layer thin film or a multi-layer composite thin film without special limitations. When the separator is a multi-layer composite thin film, the materials of the layers can be the same or different without special limitations.

In some embodiments, the positive electrode plate, the negative electrode plate, and the separator can be made into an electrode assembly by a winding process or a lamination process.

In some embodiments, the battery cell may include an outer package. The outer package can be used for encapsulating the above electrode assembly and electrolyte.

In some embodiments, the outer package of the battery cell may be a hard shell, such as a hard plastic case, an aluminum shell, or a steel shell. The outer package of the battery cell can also be a soft package, such as a pouch-type soft package. The material of the soft package can be plastic, and examples of the plastic can include polypropylene, polybutylene terephthalate, polybutylene succinate, etc.

The shape of the battery cell is not particularly limited in the present disclosure, and the secondary battery can be cylindrical, prismatic, or in any other shape. For example, FIG. 7 is a battery cell 5 with a prismatic structure as an example.

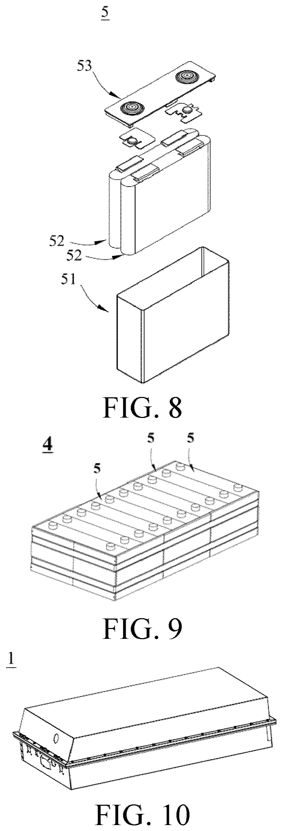

In some embodiments, referring to FIG. 8, the outer package can include a case 51 and a cover plate 53. The case 51 can include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator can be made into an electrode assembly 52 by a winding process or a lamination process. The electrode assembly 52 is encapsulated into the accommodating cavity. An electrolyte solution infiltrates into the electrode assembly 52. The number of electrode assemblies 52 contained in the battery cell 5 can be one or more and can be selected by those skilled in the art according to specific actual requirements.

In some embodiments, the battery cell can be assembled into a battery module. The number of battery cells contained in the battery module can one or more, and the specific number can be selected by those skilled in the art based on the application and capacity of the battery module.

FIG. 9 is a battery module 4 as an example. Referring to FIG. 9, in the battery module 4, a plurality of battery cells 5 may be sequentially arranged in a length direction of the battery module 4. Certainly, they can also be arranged in any other way. The plurality of battery cells 5 can be further fixed by fasteners.

Optionally, the battery module 4 can further include a shell having an accommodating space, in which the plurality of battery cells 5 are accommodated.

In some embodiments, the above battery module can further be assembled into a battery pack. The number of battery modules contained in the battery pack can be one or more, and the specific number can be selected by those skilled in the art according to the application and capacity of the battery pack.

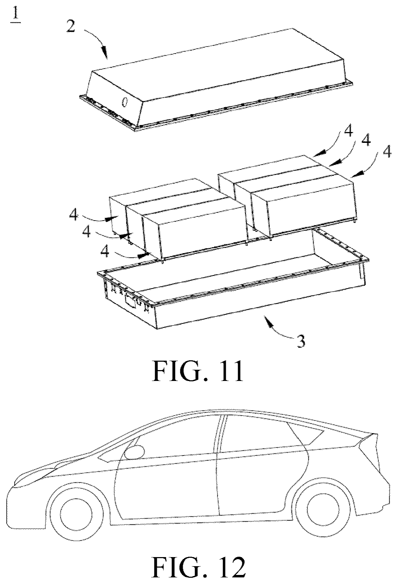

FIGs. 10 and 11 show a battery pack 1 as an example. Referring to FIGs. 10 and 11, the battery pack 1 can include a battery box and a plurality of battery modules 4 arranged in the battery box. The battery box includes an upper box 2 and a lower box 3. The upper box 2 can cover the lower box 3 to form an enclosed space for accommodating the battery module 4. The plurality of battery modules 4 can be arranged in the battery box in any manner.

In addition, the present disclosure further provides an electrical device. The electrical device includes the secondary battery provided by the present disclosure. The secondary battery can be used as a power source for the electrical device and can also be used as an energy storage unit for the electrical device. The electrical device can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical device, the battery cell, battery module, or battery pack can be selected according to use requirements.

FIG. 12 is an electrical device as an example. The electrical device is an all-electric vehicle, a hybrid electric vehicle, a plug-in hybrid electric vehicle, etc. To satisfy the need of the electrical device for a high power and high energy density of secondary batteries, a battery pack or a battery module can be used.

The device used as another example can be, for example, a mobile phone, a tablet computer, a laptop, etc. The device is generally required to be light and thin and can use a battery cell as a power source.

### Embodiments

Embodiments of the present disclosure will be described hereinafter. The embodiments described below are exemplary and only used to explain the present disclosure, and should not be construed as a limitation on the present disclosure. In embodiments in which no specific technologies or conditions are specified, technologies or conditions described in the literature in the art or product specifications are followed. The reagents or instruments used without manufacturer indicated are all commercially available conventional products.

### Preparation of binary multi-phase alloy

### Embodiment 1

(1) Pure Cu and pure Mn (purity requirement ≥ 99.9%) were provided in a weight ratio of 39 : 61 and subjected to vacuum induction melting to prepare an Mn-Cu binary alloy.
(2) The obtained Mn-Cu alloy was subjected to forging and homogenization heat treatments. The forging pressure was 1000 tons, the temperature of the homogenization heat treatment was 900°C, and the time was 24 h.
(3) The Mn-Cu alloy obtained in step 2 was rolled to obtain a foil with a thickness of 0.23 mm.
(4) The Mn-Cu alloy obtained in step 3 was subjected to a recrystallization treatment. The temperature was 750°C, and the time was 1 h.
(5) The Mn-Cu alloy obtained in step 4 was subjected to a spinodal decomposition treatment. The temperature was 450°C, and the time was 2 h.
(6) The Mn-Cu alloy obtained in step 5 was subjected to a phase separation treatment. The temperature was 600°C, and the time was 4 h.

### Embodiment 2

(1) Pure Cu and pure Mn (purity requirement ≥ 99.9%) were provided in a weight ratio of 40 : 60 and subjected to vacuum induction melting to prepare an Mn-Cu binary alloy.
(2) The obtained Mn-Cu alloy obtained in step 1 was subjected to forging and homogenization heat treatments. The forging pressure was 1000 tons, the temperature of the homogenization heat treatment was 900°C, and the time was 24 h.
(3) The Mn-Cu alloy obtained in step 2 was rolled to obtain a foil with a thickness of 0.23 mm.
(4) The Mn-Cu alloy obtained in step 3 was subjected to a recrystallization treatment. The temperature was 750°C, and the time was 1 h.
(5) The Mn-Cu alloy obtained in step 4 was subjected to a spinodal decomposition treatment. The temperature was 450°C, and the time was 2 h.
(6) The Mn-Cu alloy obtained in step 5 was subjected to a phase separation treatment. The temperature was 650°C, and the time was 4 h.

### Embodiment 3

(1) Pure Cu and pure Mn (purity requirement ≥ 99.9%) were provided in a weight ratio of 22 : 78 and subjected to vacuum induction melting to prepare an Mn-Cu binary alloy.
(2) The obtained Mn-Cu alloy obtained in step 1 was subjected to forging and homogenization heat treatments. The forging pressure was 1000 tons, the temperature of the homogenization heat treatment was 900°C, and the time was 24 h.
(3) The Mn-Cu alloy obtained in step 2 was rolled to obtain a foil with a thickness of 0.23 mm.
(4) The Mn-Cu alloy obtained in step 3 was subjected to a recrystallization treatment. The temperature was 750°C, and the time was 1 h.
(5) The Mn-Cu alloy obtained in step 4 was subjected to a spinodal decomposition treatment. The temperature was 450°C, and the time was 2 h.
(6) The Mn-Cu alloy obtained in step 5 was subjected to a phase separation treatment. The temperature was 650°C, and the time was 4 h.

### Embodiment 4

(1) Pure Cu and pure Mn (purity requirement ≥ 99.9%) were provided in a weight ratio of 22 : 78 and subjected to vacuum induction melting to prepare an Mn-Cu binary alloy.
(2) The obtained Mn-Cu alloy obtained in step 1 was subjected to forging and homogenization heat treatments. The forging pressure was 1000 tons, the temperature of the homogenization heat treatment was 900°C, and the time was 24 h.
(3) The Mn-Cu alloy obtained in step 2 was rolled to obtain a foil with a thickness of 0.23 mm.
(4) The Mn-Cu alloy obtained in step 3 was subjected to a recrystallization treatment. The temperature was 750°C, and the time was 1 h.
(5) The Mn-Cu alloy obtained in step 4 was subjected to a spinodal decomposition treatment. The temperature was 400°C, and the time was 2 h.
(6) The Mn-Cu alloy obtained in step 5 was subjected to a phase separation treatment. The temperature was 650°C, and the time was 4 h.

### Embodiment 5

(1) Pure Cu and pure Mn (purity requirement ≥ 99.9%) were provided in a weight ratio of 22 : 78 and subjected to vacuum induction melting to prepare an Mn-Cu binary alloy.
(2) The obtained Mn-Cu alloy obtained in step 1 was subjected to forging and homogenization heat treatments. The forging pressure was 2000 tons, the temperature of the homogenization heat treatment was 900°C, and the time was 24 h.
(3) The Mn-Cu alloy obtained in step 2 was rolled to obtain a foil with a thickness of 0.23 mm.
(4) The Mn-Cu alloy obtained in step 3 was subjected to a recrystallization treatment. The temperature was 750°C, and the time was 1 h.
(5) The Mn-Cu alloy obtained in step 4 was subjected to a spinodal decomposition treatment. The temperature was 500°C, and the time was 2 h.
(6) The Mn-Cu alloy obtained in step 5 was subjected to a phase separation treatment. The temperature was 650°C, and the time was 4 h.

### Comparative Example 1

Pure Cu and pure Mn (purity requirement ≥ 99.9%) were provided in a weight ratio of 22 : 78 and subjected to vacuum induction melting and forging to obtain an Mn-Cu binary alloy sample.

### Comparative Example 2

An alloy was prepared by the same process as in Embodiment 3, except that pure Cu and pure Mn (purity requirement ≥ 99.9%) were provided in a weight ratio of 20 : 80.

### Characterization of alloy

### Morphological characterization

After each step of the above embodiments and comparative examples, the obtained products were observed by a metallographic microscope (model NM910-R) and characterized by an X-ray diffractometer (model D8A A25).

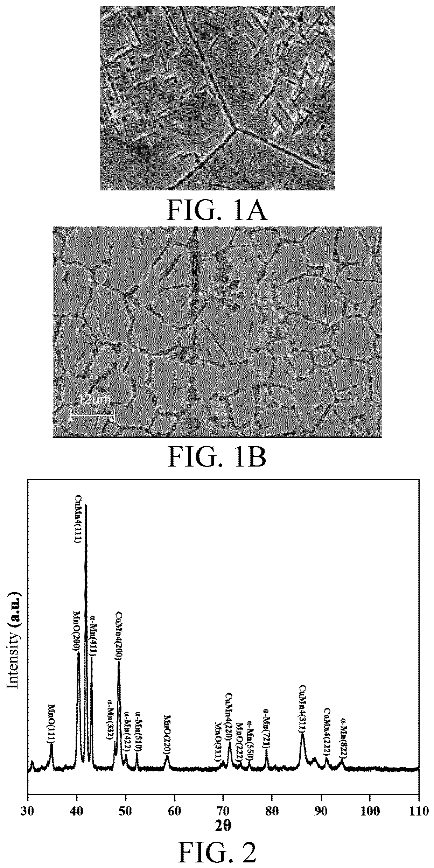

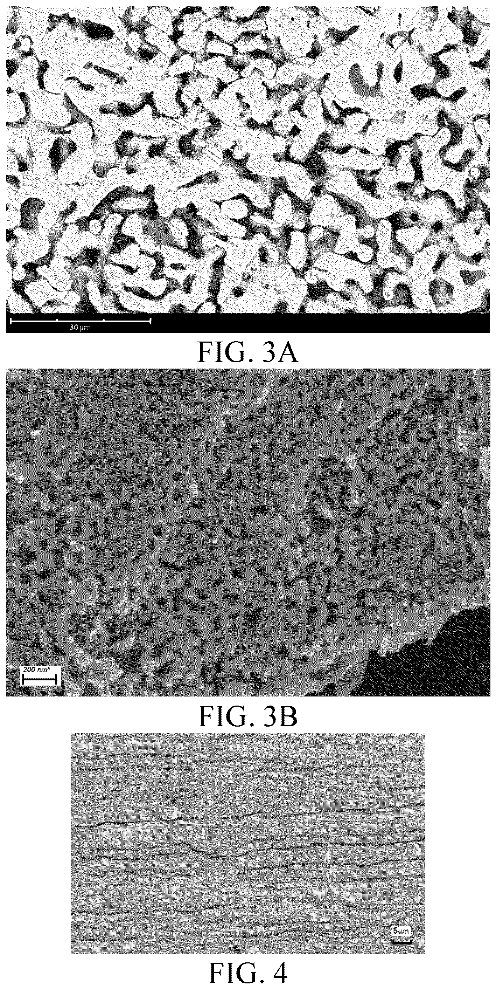

From the metallographic diagrams of Embodiments 1-5 and Comparative Example 2, it was observed that after step 4, quasi-equiaxial crystals were formed, whereas in Comparative Example 1, no crystal grains were observed. Here, a metallographic photograph of Mn-Cu prepared in Embodiment 3 (see FIG. 1A), a backscattering photograph (see FIG. 1B), and a metallographic photograph of the alloy prepared in Comparative Example 1 (FIG. 4) were shown by way of example.

Black lines or needles in FIG. 1A were formed after metallographic corrosion. The corroded substance was the element Mn or a phase with a relatively high content of Mn, and continuous gully lines were formed after grain boundary corrosion.

In FIG. 1B, gray-black regions were grain boundary regions and intragranular Mn-rich regions, and some grain boundary regions show a discontinuous distribution of Mn (for example, a shiny region on the grain boundary was where the content of Mn was relatively low).

From FIG. 4, it can be seen that without the heat treatment, a retained rolling morphology in a rolling direction (horizontal direction) appeared, and the grain boundaries had been completely destroyed.

### Characterization of grain size

The alloys prepared in Embodiments 1-5 and Comparative Example 2 were polished with 200-mesh, 600-mesh, 800-mesh, and 1200-mesh sandpapers and a diamond polishing paste until the metal surface showed a mirror morphology. The alloy was subjected to metallographic corrosion with iron chloride for a corrosion time of 10 s, then washed with alcohol and deionized water, and dried. The alloy was placed under a metallographic microscope to obtain a metallographic structure. The sizes of 50 crystal grains were statistically measured, and then the average value was calculated as the grain size of the sample. The results are shown in Table 1 below.

### HV hardness

The test equipment was HVS-1000 hardness tester, and the loading force was 300 g. The results are shown in Table 1 below.

### Crystal phase

The test equipment was an X-ray diffractometer (model D8A A25) with a scanning angle of 30°-110° and a scanning step of 0.016°. Here, an XRD pattern of the Mn-Cu alloy prepared in Embodiment 3 (see FIG. 2) was shown by way of example. Diffraction peaks of an αMn phase, a γ'Mn-Cu phase, and a γCu-Mn phase can be observed from FIG. 2.

### Preparation of porous material

The alloys obtained in Embodiments 1-5 and Comparative Examples 1-2 were cut into samples with a size of 2 cm × 3 cm, and the samples were placed in a 0.1 mol/L hydrochloric acid corrosive solution for free chemical corrosion. When no bubbles emerged, the dealloying process was complete.

Then, the framework continuity after dealloying was observed by a scanning electron microscope (Zeiss Gemini360). The results are shown in Table 1. Here, FIG. 3A shows a scanning electron microscope photograph of the Mn-Cu alloy of Embodiment 3 as a precursor after dealloying, and FIG. 3B shows an enlarged view (surface scanning) of ligament microregions in FIG. 3A. FIG. 5 shows a scanning photograph of the alloy of Comparative Example 1 as a precursor after dealloying.

**Table 1**

| Item | Grain size (µm) | α phase wt% | γ phase + γ' phase wt% | HV 0.3 kg hardness | Framework continuity |
|---|---|---|---|---|---|
| Embodiment 1 | 11.8 | 4.7 | 95.3 | 120 | Continuous |
| Embodiment 2 | 12 | 23.1 | 76.9 | 172 | Continuous |
| Embodiment 3 | 11 | 57.7 | 42.3 | 160 | Continuous |
| Embodiment 4 | 9.3 | 57.7 | 42.3 | 140 | Continuous |
| Embodiment 5 | 14.5 | 57.7 | 42.3 | 190 | Serious grain boundary corrosion, but continuous intragranular pores |
| Comparative Example 1 | Destroyed grain boundaries and no complete crystal grains | 0 | 100 | 152 | Failed to form a continuous framework |
| Comparative Example 2 | 15.7 | 0 | 100 | 96 | Directly powdered, with failed formation |

As shown in the scanning electron microscope photograph of FIG. 3A, porous copper has pores with a first pore size (hereinafter referred to as macropores) and pores with a second pore size (hereinafter referred to as micropores). 100 macropores and 100 micropores were selected from the scanning electron microscope photograph, and the pore sizes of the macropores and micropores were measured respectively. The average values were calculated respectively. The results show that the average pore size of macroporous copper is 6.4 microns and the average pore size of micropores is 86 nanometers. In addition, similar results were obtained in the alloys prepared in the other embodiments. From the above experimental data, it can be seen that the porous material of the present disclosure can be successfully prepared by the binary alloy of the present disclosure.

In contrast, it is apparent from the photograph as shown in FIG. 5 that the alloy of Comparative Example 1 cannot result in a continuous framework after corrosion, and therefore, no porous material with regular pores can be obtained. However, the alloy of Comparative Example 2 was directly powdered after corrosion, and no corresponding scanning electron microscope photograph was obtained.

It needs to be noted that the present disclosure is not limited to the above embodiments. The above embodiments are only illustrative, and the embodiments within the scope of the technical solution of the present disclosure that have substantively the same composition and the same role and effect as the technical idea are all included in the technical scope of the present disclosure. In addition, within the scope of not departing from the gist of the present disclosure, various variations made to the embodiments that are conceivable to those skilled in the art and other modes constructed by combining some constituent elements of the embodiment are also included in the scope of the present disclosure.

## Claims

1. An Mn-M binary multi-phase alloy, comprising:
39 wt% ≤ Mn ≤ 78 wt%, with the balance comprising metal M,
wherein the standard electrode potential of the metal M is higher than the standard electrode potential of Mn, and
an αMn phase, a γM-Mn phase, and a γ'Mn-M phase are distributed in the binary metal multi-phase alloy.

2. The multi-phase alloy according to claim 1, wherein the multi-phase alloy comprises 68 wt% ≤ Mn ≤ 78 wt%.

3. The multi-phase alloy according to claim 1 or 2, wherein the metal M is selected from one of Cu, Cr, Co, Sn, and Ni.

4. The multi-phase alloy according to any one of claims 1 to 3, wherein the multi-phase alloy comprises quasi-equiaxial crystal grains.

5. The multi-phase alloy according to claim 4, wherein the quasi-equiaxial crystal grains have an average size of 5 µm-30 µm.

6. The multi-phase alloy according to claim 5, wherein the quasi-equiaxial crystal grains have an average size of 10 µm-25 µm.

7. The multi-phase alloy according to any one of claims 1 to 6, wherein the crystal grains of the multi-phase alloy have grain boundaries with a discontinuous distribution of metal Mn and metal M.

8. The multi-phase alloy according to any one of claims 1 to 7, wherein the αMn phase accounts for 4.6 wt%-65.6 wt% of the multi-phase alloy.

9. The multi-phase alloy according to claim 8, wherein the content of the element Mn in the αMn phase is greater than 99 wt%.

10. The multi-phase alloy according to any one of claims 1 to 9, wherein the γM-Mn phase and the y'Mn-M phase add up to 34.4 wt%-95.3 wt% of the multi-phase alloy.

11. The multi-phase alloy according to claim 10, wherein the content of the element M in the γM-Mn phase is 35 wt%-100 wt%, and the content of the element Mn in the y'Mn-M phase is 60 wt%-72 wt%.

12. A method for preparing an Mn-M binary multi-phase alloy, comprising:
smelting Mn and metal M in a weight ratio of (39-78) : (22-61) to obtain an Mn-M binary alloy, wherein the standard electrode potential of the metal M is higher than the standard electrode potential of Mn;
subjecting the resulting Mn-M binary alloy to a first heat treatment to obtain a first product comprising a γMn-M solid solution;
subjecting the first product to a second heat treatment for crystallizing the first product to obtain a second product;
subjecting the second product to a third heat treatment to obtain a third product comprising a γM-Mn phase and a y'Mn-M phase; and
subjecting the third product to a fourth heat treatment to obtain a binary multi-phase alloy comprising an αMn phase, a γM-Mn phase, and a y'Mn-M phase.

13. The method according to claim 12, wherein the method comprises one or more of the following features:
the first heat treatment is a homogenization heat treatment;
a temperature of the first heat treatment is 720°C-900°C;
a time of the first heat treatment is 12 h-24 h; and
after the first heat treatment, the alloy is subjected to plastic working.

14. The method according to claim 12 or 13, wherein the method comprises one or more of the following features:
the second heat treatment is a recrystallization treatment;
a temperature of the second heat treatment is 720°C-800°C; and
a time of the second heat treatment is 0.5 h-6 h.

15. The method according to any one of claims 12 to 14, wherein the method comprises one or more of the following features:
the third heat treatment is a spinodal decomposition treatment;
a temperature of the third heat treatment is 400°C-500°C; and
a time of the third heat treatment is 0.5 h-4 h.

16. The method according to any one of claims 12 to 15, wherein the method comprises one or more of the following features:
the fourth heat treatment is a phase separation treatment;
a temperature of the fourth heat treatment is 600°C-680°C; and
a time of the fourth heat treatment is 1 h-6 h.

17. Use of the Mn-M binary multi-phase alloy according to any one of claims 1 to 11 or an Mn-M binary multi-phase alloy prepared by the method according to any one of claims 12 to 16 in preparation of a porous material, wherein optionally, the porous material is used as a current collector.

18. A porous material obtained by dealloying the Mn-M binary multi-phase alloy according to any one of claims 1 to 11 or an Mn-M binary multi-phase alloy prepared by the method according to any one of claims 12 to 16, wherein the porous material has pores with a first pore size and a second pore size, the first pore size is n microns, with 0.5 ≤ n ≤ 10, and the second pore size is m nanometers, with 20 < m < 200.

19. The porous material according to claim 18, wherein 2 ≤ n ≤ 5.

20. The porous material according to claim 18 or 19, wherein 40 < m < 70.

21. A current collector, comprising the porous material according to any one of claims 18 to 20.

22. A secondary battery, comprising the current collector according to claim 21.

23. An electrical device, comprising the secondary battery according to claim 22.
